# EUROPÄISCHE PATENTSCHRIFT

(11) **EP 3 177 818 B1**
(45) Veröffentlichungstag und Bekanntmachung des Hinweises auf die Patenterteilung: **19.02.2020**
(21) Anmeldenummer: 15738345.6
(22) Anmeldetag: 15.07.2015
(51) Int. Cl.: F02D 19/10, F02D 41/00

(54) **VERFAHREN ZUM BETREIBEN EINER SELBSTZÜNDENDEN BRENNKRAFTMASCHINE**
METHOD FOR OPERATING A COMPRESSION-IGNITION INTERNAL COMBUSTION ENGINE
PROCÉDÉ SERVANT À FAIRE FONCTIONNER UN MOTEUR À COMBUSTION INTERNE À ALLUMAGE AUTOMATIQUE

(30) Priorität: 04.08.2014 DE 102014215265; 03.11.2014 DE 102014222419
(43) Veröffentlichungstag der Anmeldung: 14.06.2017
(73) Patentinhaber: Volkswagen Aktiengesellschaft, 38440 Wolfsburg (DE)
(72) Erfinder: KRÖGER, Christoph, 38440 Wolfsburg (DE); MORK, Aiko, 38518 Gifhorn (DE); KLÜTING, Christian, 38440 Wolfsburg (DE); SCHÜTTENHELM, Martin, 38108 Braunschweig (DE); WEISSNER, Michael, 38442 Wolfsburg (DE)
(86) Internationale Anmeldenummer: PCT/EP2015/066192
(87) Internationale Veröffentlichungsnummer: WO 2016/020160

(56) Entgegenhaltungen:
- CA-A1- 2 875 107
- DE-A1-102008 001 724
- GB-A- 2 402 754
- US-A1- 2013 338 903

## Beschreibung

Die Erfindung betrifft ein Verfahren zum Betreiben einer selbstzündenden Brennkraftmaschine mit den Merkmalen gemäß dem Oberbegriff des Anspruchs 1. Des Weiteren betrifft die Erfindung eine selbstzündende Brennkraftmaschine mit den Merkmalen gemäß dem Oberbegriff des Anspruchs 10.

Ein stöchiometrisches Brennverfahren bei einer selbstzündenden Brennkraftmaschine, insbesondere bei einem Dieselmotor, ermöglicht die Nutzung eines vom Ottomotor bekannten 3-Wege-Katalysators mit niedrigsten Emissionen aus der Abgasanlage. In Bezug auf Aufwand und Kosten des Systems stellt ein 3-Wege-Katalysator eine deutliche Vereinfachung der Abgasnachbehandlung bei einer selbstzündenden Brennkraftmaschine dar. Nachteilig bei einem stöchiometrischen Brennverfahren können höhere CO2- und Ruß-Emissionen im Vergleich zum überstöchiometrischen (mageren) Betrieb sein.

Die Einstellung der stöchiometrischen Verbrennung mit Hilfe eines zu konventionellem Diesel alternativen Kraftstoffs, bevorzugt von Gas, bietet das Potenzial zur Verringerung der CO2- und Ruß-Emissionen unter der Beibehaltung der Vorteile einer selbstzündenden Brennkraftmaschine mit einer vereinfachten Abgasnachbehandlung. Grundsätzlich ist allgemein die Einstellung eines stöchiometrischen Gemisches mittels Ersetzung der Frischluft durch Gas (Brenngas), zum Beispiel Biogas, Flüssiggas (LPG), komprimiertes Naturgas (CNG) oder verdampftes flüssiges Naturgas (LNG), bekannt. Beispielsweise sind in den Dokumenten WO 2011/154028 A1 und WO 2011/154027 A1 bivalente aufgeladene Motoren, insbesondere auch selbstzünde Motoren, mit variablem Luft-Kraftstoff-Verhältnis beschrieben, wobei es sich bevorzugt um fremdgezündete Motoren mit einem Wasserstoffmischbetrieb handelt.

Im Dokument DE 103 21 793 A1 wird ein Verfahren zum Betreiben einer bivalenten Brennkraftmaschine beschrieben, welche mager mittels eines Kraftstoffs wie Wasserstoff betreibbar ist. Es sind ein erster, dem stöchiometrischen Luft-Kraftstoff-Verhältnis benachbarter Magerbereich und ein zweiter, sich diesem in Richtung größerer λ-Werte anschließender Magerbereich definiert, wobei ein Betrieb im zweiten Magerbereich oder bei annähernd stöchiometrischem Luftverhältnis erfolgt.

Das Dokument WO 02/101214 A1 betriff ein Steuerungssystem eines bivalenten Dieselmotors, welcher in einer ersten Betriebsart nur mit Diesel und in einer zweiten Betriebsart mit einem Gemisch aus Diesel und Methangas betreibbar ist.

Im Dokument GB 2 402 754 A wird ein Verfahren zum Betreiben einer Brennkraftmaschine mit zwei Kraftstoffen beschrieben. Die Kraftstoffe können Diesel und Gas sein. Dabei wird die Brennkraftmaschine in gewissen Betriebsfeldern mit bestimmten Zusammensetzungen aus Kraftstoff und Luft in der Brennkammer betrieben. Für bestimmte Betriebsfelder wird dabei nur Diesel eingespritzt und für andere zwei Einspritzungen eine mit Diesel und eine mit Gas vorgenommen. Dabei wird für das Luft-Kraftstoff-Gemisch zur Berechnung neben der Luftmasse auch die Masse des Gases und des Diesels berücksichtigt. Um eine betriebsoptimierte Menge zu nutzen, wird die Kraftstoffmenge mit einer Berechnung mit den Stöchiometrieverhältnissen zwischen der Luft und den Kraftstoffen Diesel und Gas bestimmt. So wird ein Luft-Kraftstoff-Verhältnis bestimmt, das beide Kraftstoffe berücksichtigt.

Das Dokument DE 10 2008 001 724 A1 beschreibt ein Verfahren und eine Vorrichtung zur Abgasoptimierung einer Brennkraftmaschine. Die Brennkraftmaschine wird dabei mit zwei Kraftstoffen betrieben, wobei der erste Kraftstoff ein Dieselkraftstoff ist. Der zweite Kraftstoff kann Ethanol sein. In dem Dokument ist beschrieben, dass eine Abgasoptimierung erfolgt, wenn die beiden Kraftstoffe mit der Luft einen Lambdawert von 1 oder nahe 1 erreichen.

Stöchiometrische Brennverfahren für Brennkraftmaschine in Verbindung mit einem 3-Wege-Katalysator in einem reinen Gasbetrieb sind grundsätzlich bekannt und gelangen verbreitet für fremdgezündete Brennkraftmaschine zum Einsatz. In diesem Fall ist es besonders erstrebenswert, eine vollständige Verbrennung ohne unerwünschte Methan-Emission zu erreichen, da Methan eine um etwa den Faktor 25 gesteigerte Wirksamkeit auf den Treibhauseffekt wie CO2 hat. Eine praktische Limitierung des reinen Gasbetriebs ist für den Nutzer einer derartigen Brennkraftmaschine durch die bislang nur eingeschränkt vorhandene Infrastruktur gegeben. Schließlich kann Gas nahe der Volllast des Motors zu Klopfen führen, so dass zu dessen Vermeidung der Zündzeitpunkt wirkungsgradverschlechternd verstellt werden muss.

Vor diesem Hintergrund ist es Aufgabe der vorliegenden Erfindung, ein Verfahren zum Betreiben einer selbstzündenden bivalenten Brennkraftmaschine zu schaffen, welche Vorteile einer Betriebsart mit einem ersten Kraftstoff mit den Vorteilen einer Betriebsart mit einem Gemisch aus dem ersten und einem zweiten Kraftstoff, insbesondere im Hinblick auf das Emisssionsverhalten, miteinander vereint.

Diese Aufgabe wird erfindungsgemäß durch ein Verfahren zum Betreiben einer selbstzündenden Brennkraftmaschine mit den Merkmalen gemäß Anspruch 1 gelöst. Vorteilhafte Weiterbildungen der Erfindung sind in den abhängigen Ansprüchen charakterisiert.

Im erfindungsgemäßen Verfahren zum Betreiben einer selbstzündenden Brennkraftmaschine, insbesondere bivalente Brennkraftmaschine, die mit einem ersten Kraftstoff und mit einem zweiten Kraftstoff betreibbar ist. Darüber hinaus ist die Brennkraftmaschine mit einem Gemisch aus dem ersten und dem zweiten Kraftstoff betreibbar. In dem Verfahren wird in einer Betriebsart die Brennkraftmaschine in einem ersten Teilbereich von möglichen Last-Drehzahl-Werten (im Kennfeld) mit einem Gemisch aus dem ersten und dem zweiten Kraftstoff im Wesentlichen stöchiometrisch betrieben. In einem zweiten Teilbereich von möglichen Last-Drehzahl-Werten (im Kennfeld), der vom ersten Teilbereich verschieden ist, wird die selbstzündende Brennkraftmaschine nur mit dem ersten Kraftstoff betrieben, wobei als erster Kraftstoff Diesel und als zweiter Kraftstoff Gas verwendet werden. Bei einem Auftreten einer klopfenden Verbrennung wird der Anteil des zweiten Kraftstoffes verringert und der Anteil des ersten Kraftstoffes entsprechend erhöht.

Erfindungsgemäß kann die Einstellung des stöchiometrischen Gemisches erfolgen, indem Frischluft durch einen zweiten Kraftstoff ersetzt wird: Um ein stöchiometrisches Gemisch zu erreichen, wird der über das stöchiometrische Verhältnis mit dem ersten Kraftstoff hinausgehende Frischluftanteil zur stöchiometrischen Verbrennung des zweiten Kraftstoffs genutzt. Erfindungsgemäß ist dabei eine Aufteilung des Kennfeldes der selbstzündenden Brennkraftmaschine in die oben genannten Teilbereiche, auch als Betriebsbereiche bezeichnet, vorgesehen. Konkret werden in bevorzugter Ausführungsform des Verfahrens als erster Kraftstoff Diesel und als zweiter Kraftstoff Gas, insbesondere Biogas, LPG, CNG (besonders bevorzugt) oder LNG, verwendet. Bei Auftreten von klopfender Verbrennung, wird der Gasanteil verringert und der Dieselanteil entsprechend erhöht. Der Gasanteil wird unter 90% verringert.

In Konsequenz können die Abgasnachbehandlung der selbstzündenden Brennkraftmaschine vereinfacht und die Systemkosten verringert werden. Insbesondere können Abgasnachbehandlungskomponenten zur Verringerung beziehungsweise Entfernung von Stickoxiden, zum Beispiel ein SCR-Katalyse-System und/oder ein Stickoxidspeichersystem, vermieden werden. Stattdessen ist die Nutzung eines 3 Wege-Katalysators bei der selbstzündenden Brennkraftmaschine mit sehr hohen Konvertierungsraten für Stickoxide, Kohlenwasserstoffe und Kohlenmonoxid möglich. Im stöchiometrischen Betrieb kann die Abgastemperaturen zur Unterstützung der Abgasnachbehandlung erhöht werden. Auf diese Weise sind in konkreten Ausgestaltungen der Brennkraftmaschine mit konkreten ersten und zweiten Kraftstoffen, eine erhöhte Methanoxidation, eine erhöhte Rußoxidation und/oder kontinuierliche Regeneration eines Partikelfilters möglich. Es ist in vorteilhafter Weise eine Verringerung beziehungsweise eine Überkompensation der CO2-Emissionen beziehungsweise des Kraftstoffverbrauchs aufgrund des besseren H-C-Verhältnisses von Gas erreichbar. Es folgt daraus eine geringere CO2-Emissionen in Bezug auf die bei der Verbrennung freigesetzten Energiemenge. Schließlich können auch eine Verringerung der Rußemissionen und/oder eine Verringerung der Beladung eines Partikelfilters in der Abgasnachbehandlung erreicht werden.

Bevorzugt wird darüber hinaus die Brennkraftmaschine in einer weiteren Betriebsart im ersten Teilbereich von möglichen Last-Drehzahl-Werten nur mit dem ersten Kraftstoff stöchiometrisch betrieben. Auf diese vorteilhafte Weise ist der Betrieb der Brennkraftmaschine unabhängig von der Infrastruktur für den zweiten Kraftstoff im gesamten Kennfeld möglich.

Der erste Teilbereich und der zweite Teilbereich können an einer Lastgrenzlinie aneinander grenzen. Der erste und der zweite Teilbereich können sich zum gesamten Kennfeld ergänzen. Dabei wird der erste Teilbereich bevorzugt von der Volllastlinie, der Lastgrenzlinie, einem Streckenabschnitt einer minimalen Drehzahllinie und einem Streckenabschnitt einer maximalen Drehzahllinie begrenzt und wird der zweite Teilbereich bevorzugt von der Minimallastlinie, der Lastgrenzlinie, einem anderen Streckenabschnitt der minimalen Drehzahllinie und einem anderen Streckenabschnitt der maximalen Drehzahllinie begrenzt.

In einer bevorzugten Ausführungsform des erfindungsgemäßen Verfahrens zum Betreiben einer selbstzündenden Brennkraftmaschine werden in der Betriebsart im ersten Teilbereich ein erster Anteil des ersten Kraftstoffs und ein zweiter Anteil des zweiten Kraftstoffs im Gemisch variabel einer Verbrennung zugeführt. Dabei ergänzen sich der erste und der zweite Anteil zu 100% und beträgt der erste Anteil zwischen 100% und 10% und der zweite Anteil zwischen 0% und 90%.

Es ist besonders vorteilhaft und bevorzugt, wenn darüber hinaus die Brennkraftmaschine im zweiten Teilbereich überstöchiometrisch betrieben wird (λ>1).

In einer vorteilhaften Weiterbildung des erfindungsgemäßen Verfahrens wird bei Auftreten eines irregulären Verbrennungsphänomens in der Betriebsart im ersten Teilbereich - in einem Unterbereich des ersten Teilbereichs - ein Anteil des zweiten Kraftstoffs im Gemisch auf unter 90% verringert.

Die selbstzündende Brennkraftmaschine, in welcher das erfindungsgemäße Verfahren zum Einsatz gelangt, kann wenigstens eine Abgasrückführung, eine Hochdruck- und/oder Niederdruckabgasrückführung, aufweisen. Für derartige Brennkraftmaschinen ist es bevorzugt, wenn in der weiteren Betriebsart im ersten Teilbereich kein Abgas rückgeführt wird und/oder wenn beim Betrieb im zweiten Teilbereich Abgas rückgeführt wird.

Derartige, erfindungsgemäße selbstzündende Brennkraftmaschinen sind in Abgrenzung zu den so genannten Dual-Fuel-Motoren zu sehen. Die Dual-Fuel-Motoren sind Gas-Dieselmotoren, die mit Hilfe des Zündstrahlverfahrens betrieben werden. Beim Zündstrahlverfahren werden bis zu 99 % des Dieselkraftstoffes durch Gas ersetzt. Da Gas eine relativ hohe Oktanzahl besitzt, ist dann eine Fremdzündung notwendig. Der eingesetzte Dieselkraftstoff dient als Zündöl und entzündet das Luft-Gas-Gemisch. Der Dieselkraftstoff liefert dabei nur bis 1 % der Gesamtenergiemenge. Im erfindungsgemäßen Verfahren sind die genutzten Mengen an Dieselkraftstoff höher. Zündstrahlverfahren, welche die Entzündung des Gases mittels kleiner Menge Diesel nutzen, sind im stöchiometrischen oder überstöchiometrischen Betrieb zum Beispiel bekannt aus den Dokumenten: EP 964 139 B1, DE 198 26 477 A1, DE197 54 354 C1, DE195 05 127 C1, DE 34 04 038 A1, und AT 5936 U1.

Im Zusammenhang des erfindungsgemäßen Gedankens steht auch eine selbstzündende Brennkraftmaschine, bevorzugt für ein Fahrzeug, insbesondere ein gleisloses Landfahrzeug, wie ein Personenkraftwagen oder ein Nutzfahrzeug, mit einer Steuerung, welche wenigstens einen Rechner und ein (vom Rechner lesbares) Speicherelement umfasst. Erfindungsgemäß ist in dem Speicherelement ein Programm abgelegt, welches bei wenigstens teilweiser Ausführung im Rechner die Schritte des Verfahrens zur Betreiben einer selbstzündenden Brennkraftmaschine mit den Merkmalen oder einer Kombination der Merkmale gemäß dieser Darstellung ausführt. Die Brennkraftmaschine ist bevorzugt aufladbar.

Die in dieser Beschreibung dargestellten Merkmale können einzeln oder in Kombination, seien es sämtliche Merkmale oder nur eine Teilmenge der Menge aller Merkmale, in einem erfindungsgemäßen Verfahren und/oder einer erfindungsgemäßen Brennkraftmaschine verwirklicht sein.

Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1: eine schematische Darstellung einer Ausführungsform eines aufgeladenen Dieselmotors, in welchem das erfindungsgemäße Verfahren zum Einsatz gelangt,
- Figur 2: ein beispielhaftes Last-Drehzahl-Kennfeld des aufgeladenen Dieselmotors gemäß Figur 1 für dessen Diesel-Gas-Mischbetrieb mit einer erfindungsgemäßen Einteilung in einen ersten und einen zweiten Teilbereich, wobei der erste Teilbereich in zwei Unterbereiche eingeteilt ist, und
- Figur 3: ein beispielhaftes Last-Drehzahl-Kennfeld des aufgeladenen Dieselmotors gemäß Figur 1 für dessen reinen Diesel-Betrieb mit einer erfindungsgemäßen Einteilung in einen ersten und einen zweiten Teilbereich, wobei die Einteilung identisch zu der Einteilung gemäß Figur 2 ist.

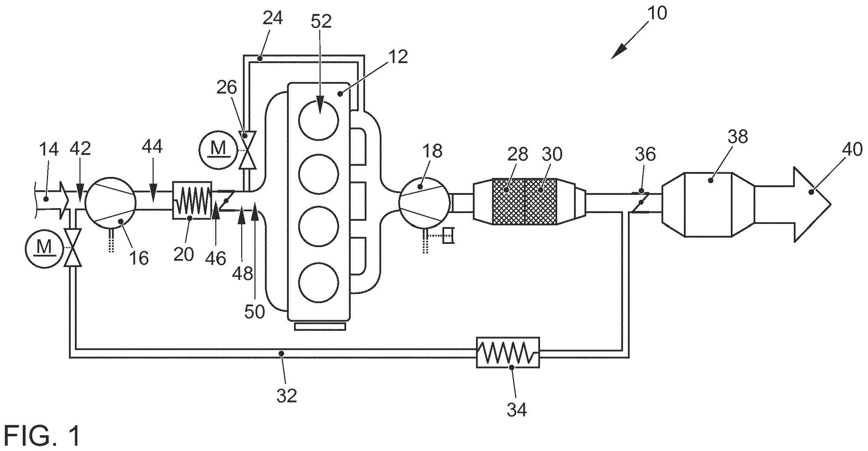

Die in der Figur 1 schematisch gezeigte selbstzündende Brennkraftmaschine 10 ist ein aufgeladener Dieselmotor mit einem konventionellen Kraftstoffsystem für die direkte Einbringung des Dieselkraftstoffes in den Brennraum. Die einzelnen Baugruppen sind in der Figur 1 mit Bezugszeichen versehen, deren Zuordnung in der unten beigefügten Bezugszeichenliste aufgeführt ist. Die Abgasnachbehandlung mittels Dieseloxidationskatalysator 28 und Dieselpartikelfilter 30 kann in einer alternativen Ausführungsform auch durch einen 3-Wege-Katalysator ersetzt sein. Während das Abgas, welches die Turbine 18 durchströmt, noch Partikel enthält, werden diese mittels der Kombination aus Dieseloxidationskatalysator 28 und Dieselpartikelfilter 30 aus dem Abgas entfernt. Die Stickoxide, unverbrannte Kohlenwasserstoffe (HC) und das Kohlenmonoxid werden stromabwärts mittels des 3-Wege-Katalysators 38 aus dem Abgas entfernt. Mit anderen Worten, das aus einem Dieseloxidationskatalysator 28 und einem Dieselpartikelfilter 30 bestehende Abgasnachhandlungssystem ist um einen 3-Wege-Katalysator erweitert, bevor das Abgas den Abgasauslass 40 erreicht. Der 3-Wege-Katalysator kann auch alternativ den Oxidationskatalysator ersetzen oder dem Dieselpartikelfilter nachgeschaltet werden. Der Motor besitzt des Weiteren eine Abgasrückführung, ausgeführt in dieser Ausführungsform als HochdruckAbgasrückführung 24 (HD-EGR) und Niederdruck-Abgasrückführung 32 (ND-EGR). Die HD-EGR 24 ist mittels eines HD-EGR-Ventil 26 steuerbar. Die ND-EGR 32 verfügt über einen Abgaskühler 34. Sie ist ebenfalls mittels eines Ventils steuerbar. Sie zweigt vor einer Abgasklappe 36 stromauf des 3-Wege-Katalysators 38 ab und mündet stromauf des Verdichters 16 in die Luftzufuhr 14.

Zusätzlich ist der Dieselmotor mit einer Einblasung für Gas ausgestattet. Mögliche Einbringungstellen für Gas sind als die Positionen 42 bis 52 in der Figur 1 gezeigt: Es sind eine zentrale Einblasung in die Luftzufuhr 14 (erste bis vierte Positionen 42, 44, 46, 48), vor oder nach dem Verdichter 16, dem Ladeluftkühler 20 und der Drossel 22, oder eine - besonders bevorzugt - Kanaleinblasung für jeden Zylinder einzeln (fünfte Position 50, MPI) möglich. Alternativ dazu kann eine Direkteinblasung in den Zylinder im Motorblock 12, in der Figur 1 nur für einen Zylinder dargestellt, erfolgen (sechste Position 52, DI).

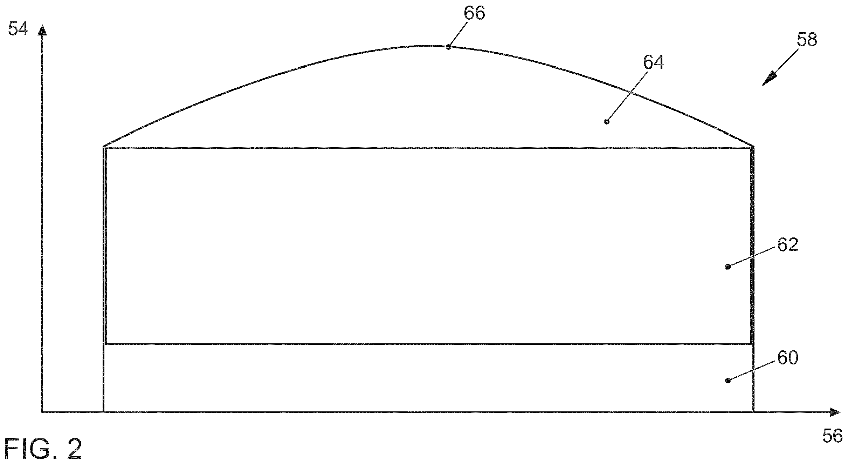

In der Figur 2 ist ein beispielhaftes Last-Drehzahl-Kennfeld des aufgeladenen Dieselmotors gemäß Figur 1 für dessen Diesel-Gas-Mischbetrieb (erste Betriebsart) mit einer erfindungsgemäßen Einteilung gezeigt. Auf der Ordinate ist die Last 54 und auf der Abszisse die Drehzahl 56 aufgetragen. Das Kennfeld des Dieselmotors ist in einen ersten Teilbereich 58 und einen zweiten Teilbereich 60 (Betriebsbereiche) jeweils mit verschiedenen Betriebsformen des Dieselmotors aufgeteilt.

Bei kleinen Lasten wird der Motor im zweiten Teilbereich 60 überstöchiometrisch mit Dieselkraftstoff betrieben (λ>1). Den dabei auftretenden Stickoxidemissionen wird mit Hilfe von Abgasrückführung begegnet. Ab mittleren bis hohen Lasten wird im ersten Unterbereich 62 des ersten Teilbereichs 58 ein stöchiometrisches Diesel-Gas-Gemisch (λ=1) eingestellt, so dass höchste Konvertierungsraten des Rohabgases mit Hilfe des 3-Wege-Katalysators erreicht werden. Für die Einstellung des stöchiometrischen Abgases wird ein Teil der Frischluft durch Gas ersetzt. Die Verhältnisse zwischen Diesel und Gas reichen von 100% Diesel und 0% Gas bis zu etwa 10% Diesel und etwa 90% Gas. Bevorzugt erfolgt dieser stöchiometrische Betrieb bei optimaler Schwerpunktlage der Verbrennung, konkret AI50%, 5 bis 15 Grad Kurbelwellenwinkel nach oberem Totpunkt.

Bei höchsten Lasten wird im zweiten Unterbereich 64 des ersten Teilbereichs 58 bis zur Volllastlinie analog zum ersten Unterbereich 62 des ersten Teilbereichs 58 verfahren. Bei Auftreten von irregulären Verbrennungen, zum Beispiel bei klopfender Verbrennung, wird der Gasanteil verringert und der Dieselanteil entsprechend erhöht. Insbesondere wird der Gasanteil unter 90% verringert.

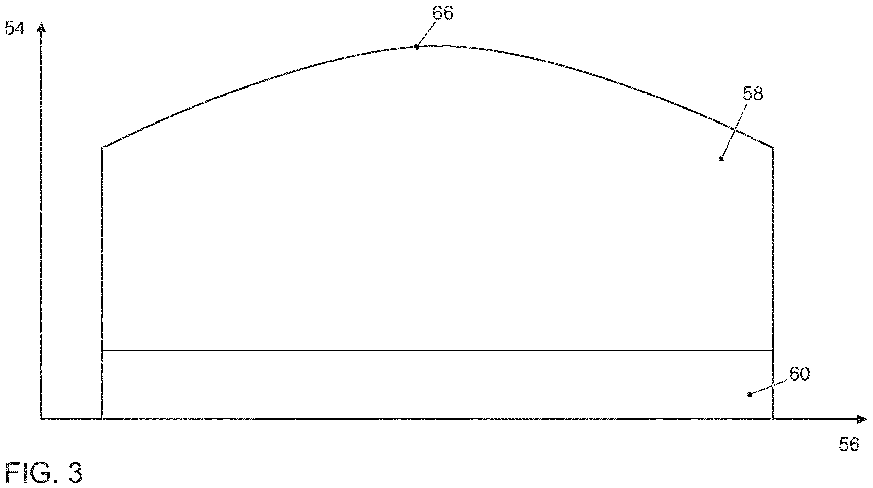

Die Figur 3 zeigt ein beispielhaftes Last-Drehzahl-Kennfeld des aufgeladenen Dieselmotors gemäß Figur 1 für dessen reinen Diesel-Betrieb mit einer erfindungsgemäßen Einteilung. Auf der Ordinate ist die Last 54 und auf der Abszisse die Drehzahl 56 aufgetragen. Das Kennfeld des Dieselmotors ist in einen ersten Teilbereich 58 und einen zweiten Teilbereich 60 (Betriebsbereiche) jeweils mit verschiedenen Betriebsformen des Dieselmotors aufgeteilt.

In dieser Betriebsart ist es möglich, den Dieselmotor im gesamten Kennfeld nur mit Diesel zu betreiben. Bei kleinen Lasten wird der Motor im zweiten Teilbereich 60 überstöchiometrisch mit Dieselkraftstoff betrieben (λ>1). Den dabei auftretenden Stickoxidemissionen wird mit Hilfe von Abgasrückführung begegnet. Ab mittleren Lasten bis zu Volllastlinie 66 im ersten Teilbereich 58 wird ein stöchiometrisches Gemisch (λ=1) eingestellt, so dass höchste Konvertierungsraten des Rohabgases mit Hilfe des 3-Wege-Katalysators erreicht werden. Es erfolgt bei derartigen Lasten keine Abgasrückführung. Für die Einstellung des stöchiometrischen Abgases wird bevorzugt die Frischluftmasse über eine variable Turbinengeometrie des Turboladers verringert.

In Hinsicht auf die Unterscheidung zwischen dem ersten Teilbereich 58 und dem zweiten Teilbereich 60, insbesondere der genauen Lage der Lastgrenzlinie in bevorzugter Ausführungsform, seien noch weitere Erläuterungen gegeben.

Im zweiten Teilbereich 60 wird der Dieselmotor mit Luftüberschuss betrieben und weist demnach ein Luft-Kraftstoff-Verhältnis von λ≈1, 1-6,0 auf. Um bei einem gleichbleibenden Betriebspunkt ein stöchiometrisches Gemisch einstellen zu können (λ=1), muss die Luftmasse verringert und die Regelung von einer Qualitätsregelung (über die Kraftstoffmenge) auf eine Quantitätsreglung (über die Gemischmenge), bei der Luft und Kraftstoff immer dasselbe Verhältnis aufweisen, umgestellt werden. Bei geringen Lasten im zweiten Teilbereich 60 des Kennfeldes ist die Luftmasse bereits derart klein, dass für den stöchiometrischen Betrieb (λ=1) die Luftmasse über den Ladedruck des Verdichters mit Hilfe der variablen Turbinengeometrie nicht weiter abgesenkt werden kann. Der Ladedruck ist schon auf Umgebungsdruck und kann nicht weiter gesenkt werden. Ähnlich wie bei einem fremdgezündeten Motor beziehungsweise Ottomotor müsste in diesem Kennfeldbereich der Motor angedrosselt werden, um die gewünschte verringerte Luftmasse zu erhalten. Eine Androsselung hat aber negative Einflüsse auf den Wirkungsgrad und erhöht somit den Kraftstoffverbrauch. Deshalb soll der Motor erst ab der Saugervolllast, die Grenze des minimalen Ladedrucks ohne Androsselung, in den stöchiometrischen Betrieb wechseln. Unterhalb dieser Grenze (Lastgrenzlinie) wird der Dieselmotor im zweiten Teilbereich 60 mit Luftüberschuss (λ<1) betrieben. Die NOₓ-Emissionen werden durch Abgasrückführung verringert, die HC- und CO-Emissionen werden vom Oxidationskatalysator beziehungsweise vom 3-Wege-Katalysator konvertiert. Ab Saugervolllast wird der Dieselmotor im ersten Teilbereich 58 stöchiometrisch (λ=1) mit einer Quantitätsregelung betrieben. Die Luftmasse wird bevorzugt über die variable Turbinengeometrie geregelt. Ein Luft-Kraftstoffverhältnis von λ=1 ermöglicht die Verwendung eines Drei-Wege-Katalysators, der drei besonders unerwünschte Verbrennungsproduktarten (NOₓ, CO und HC) konvertieren kann.

Der stöchiometrische Betrieb eines Dieselmotors hat aber thermodynamische Nachteile, so dass der Kraftstoffverbrauch ansteigt. Außerdem steigen wegen der Verringerung der Luftmasse gegenüber dem überstöchiometrischen Betrieb die Ruß-Emissionen an. Da Gas im Vergleich zu Diesel ein besseres H-C-Verhältnis aufweist und nahezu rußfrei verbrennt, ist das erfindungsgemäße Ziel, in diesem Kennfeldbereich einen Teil des Dieselkraftstoffes durch Gas zu ersetzen. In vorteilhafter Weise können der Kraftstoffverbrauch und die Rußemissionen bei einem λ=1-Betrieb mit Gas-Diesel-Mischung im Vergleich zu einem λ=1-Betrieb mit reinem Diesel gesenkt werden.

In Hinsicht auf die Unterscheidung zwischen dem ersten Unterbereich 62 des ersten Teilbereichs 58 und dem zweiten Unterbereich 62 des ersten Teilbereichs 58, insbesondere der genauen Lage der Grenzlinie, seien noch ergänzende Erläuterungen gegeben. Gas kann sich wie Ottokraftstoff unter bestimmten Randbedingungen selbst entzünden, was zu einer klopfenden Verbrennung führt. Verantwortlich dafür sind vor allem hohe Zylinderdrücke und Zylindertemperaturen, wie sie beim Dieselmotor in der Volllast und in der Nähe von dieser vorkommen. Beim Ottomotor wird dem Klopfen durch eine Verringerung des Verdichtungsverhältnisses und durch Spätverstellung des Zündzeitpunktes begegnet. Beides wirkt sich allerdings negativ auf den Wirkungsgrad, also verbrauchserhöhend aus. Für diese Situation soll der Gasanteil in dem oberen Kennfeldbereich auf die Menge verringert werden, die bei den vorhandenen Randbedingungen nicht zu einer klopfenden Verbrennung führt. Die Menge Diesel wird entsprechend wieder erhöht.

Abschließend sei noch ein Beispiel für die Kraftstoffaufteilung zwischen Diesel und Gas gegeben. Das Verhältnis von Gas und Diesel wird für konkrete Dieselmotoren experimentell ermittelt und ist in Form eines Kennfeldes (Verhältnis von Gas und Diesel in Abhängigkeit von Last und Drehzahl) im Motorsteuergerät abgelegt. Das Luft-Kraftstoff-Verhältnis λ ist definiert als Quotient aus der Masse der Luft geteilt durch das Produkt aus der Masse des Kraftstoffs und des Mindestluftbedarfs des Kraftstoffs.

Das bedeutet angewandt für die Aufteilungsberechnung im Betrieb mit Gas und Diesel, dass der Nenner die Summe aus den Produkten von Masse und Mindestluftbedarf jeweils für Diesel und für Gas ist.

Daraus lässt sich die Gasmasse bei bekannter Dieselmasse und Luftmasse und bekanntem λ bestimmen.

Beispielhaft ergibt sich bei einem Mindestluftbedarf für Diesel von 14,5 kg Luft pro kg Diesel, einer Dieselmasse von 0,5 kg, einem Mindestluftbedarf für Gas von 16 kg Luft pro kg Gas und einer Luftmasse von 14,5 kg für die Gasmasse bei stöchiometrischer Verbrennung (λ=1) 0,453 kg.

### BEZUGSZEICHENLISTE

- 10: selbstzündende Brennkraftmaschine
- 12: Motorblock
- 14: Luftzufuhr
- 16: Verdichter
- 18: Turbine
- 20: Ladeluftkühler
- 22: Drossel
- 24: Hochdruckabgasrückführung (HD-EGR)
- 26: HD-EGR-Ventil
- 28: Dieseloxidationskatalysator
- 30: Dieselpartikelfilter
- 32: Niederdruckabgasrückführung (ND-EGR)
- 34: Abgaskühler
- 36: Abgasklappe
- 38: 3-Wege-Katalysator
- 40: Abgasauslass
- 42: erste Position zur Gaseinblasung
- 44: zweite Position zur Gaseinblasung
- 46: dritte Position zur Gaseinblasung
- 48: vierte Position zur Gaseinblasung
- 50: fünfte Position zur Gaseinblasung
- 52: sechste Position zur Gaseinblasung
- 54: Last
- 56: Drehzahl
- 58: erster Teilbereich
- 60: zweiter Teilbereich
- 62: erster Unterbereich
- 64: zweiter Unterbereich
- 66: Volllastlinie

## Patentansprüche

1. Verfahren zum Betreiben einer selbstzündenden Brennkraftmaschine (10), die mit einem ersten Kraftstoff und/oder mit einem zweiten Kraftstoff und einem Gemisch aus dem ersten und dem zweiten Kraftstoff betreibbar ist, in welchem in einer Betriebsart die Brennkraftmaschine in einem ersten Teilbereich (58) von möglichen Last-Drehzahl-Werten mit dem Gemisch aus dem ersten und dem zweiten Kraftstoff betrieben wird und in einem zweiten Teilbereich (60) von möglichen Last-Drehzahl-Werten, der vom ersten Teilbereich (58) verschieden ist, nur mit dem ersten Kraftstoff betrieben wird, **dadurch gekennzeichnet, dass** in dem ersten Teilbereich (58) das Gemisch aus dem ersten und dem zweiten Kraftstoff im Wesentlichen stöchiometrisch ist und bei einem Auftreten einer klopfenden Verbrennung der Anteil des zweiten Kraftstoffes verringert wird und der Anteil des ersten Kraftstoffes entsprechend erhöht wird und als erster Kraftstoff Diesel und als zweiter Kraftstoff Gas verwendet werden

2. Verfahren zum Betreiben einer selbstzündenden Brennkraftmaschine (10) gemäß Anspruch 1,
**dadurch gekennzeichnet**
**dass** in einer weiteren Betriebsart die Brennkraftmaschine im ersten Teilbereich (58) von möglichen Last-Drehzahl-Werten nur mit dem ersten Kraftstoff stöchiometrisch betrieben wird.

3. Verfahren zum Betreiben einer selbstzündenden Brennkraftmaschine (10) gemäß Anspruch 1 oder 2,
**dadurch gekennzeichnet**
**dass** der erste Teilbereich (58) und der zweite Teilbereich (60) an einer Lastgrenzlinie aneinander grenzen.

4. Verfahren zum Betreiben einer selbstzündenden Brennkraftmaschine (10) gemäß Anspruch 3,
**dadurch gekennzeichnet**
**dass** der erste Teilbereich (58) von der Volllastlinie (66), der Lastgrenzlinie, einem Streckenabschnitt einer minimalen Drehzahllinie und einem Streckenabschnitt einer maximalen Drehzahllinie begrenzt wird und dass der zweite Teilbereich (60) von der Minimallastlinie, der Lastgrenzlinie, einem anderen Streckenabschnitt der minimalen Drehzahllinie und einem anderen Streckenabschnitt der maximalen Drehzahllinie begrenzt wird.

5. Verfahren zum Betreiben einer selbstzündenden Brennkraftmaschine (10) gemäß einem der vorstehenden Ansprüche,
**dadurch gekennzeichnet**
**dass** in der Betriebsart im ersten Teilbereich (58) ein erster Anteil des ersten Kraftstoffs und ein zweiter Anteil des zweiten Kraftstoffs im Gemisch variabel einer Verbrennung zugeführt werden, wobei der erste und der zweite Anteil sich zu 100% ergänzen und der erste Anteil zwischen 100% und 10% und der zweite Anteil zwischen 0% und 90% beträgt.

6. Verfahren zum Betreiben einer selbstzündenden Brennkraftmaschine (10) gemäß einem der vorstehenden Ansprüche,
**dadurch gekennzeichnet**
**dass** die Brennkraftmaschine im zweiten Teilbereich (60) überstöchiometrisch betrieben wird.

7. Verfahren zum Betreiben einer selbstzündenden Brennkraftmaschine (10) gemäß dem Anspruch 1,
**dadurch gekennzeichnet**
**dass** beim Auftreten der klopfenden Verbrennung in der Betriebsart im ersten Teilbereich der Anteil des zweiten Kraftstoffes auf unter 90 % verringert wird.

8. Verfahren zum Betreiben einer selbstzündenden Brennkraftmaschine (10) gemäß einem der vorstehenden Ansprüche 1 bis 7 **dadurch gekennzeichnet**
**dass** in der weiteren Betriebsart im ersten Teilbereich (58) kein Abgas rückgeführt wird und/oder dass beim Betrieb im zweiten Teilbereich (60) Abgas rückgeführt wird.

9. Selbstzündende Brennkraftmaschine (10) mit einer Steuerung, welche wenigstens einen Rechner und ein Speicherelement umfasst,
**dadurch gekennzeichnet**
**dass** in dem Speicherelement ein Programm abgelegt ist, welches bei wenigstens teilweiser Ausführung im Rechner die Schritte des Verfahrens zum Betreiben einer selbstzündenden Brennkraftmaschine (10) gemäß einem der vorstehenden Ansprüche ausführt.

## Claims

1. A method for operating a self-igniting internal combustion engine (10), which can be operated by means of a first fuel and/or by means of a second fuel and a mixture of the first and the second fuel, in which in one operating mode, the internal combustion engine is operated in a first partial region (58) of possible load-rotational speed values by means of the mixture of the first and the second fuel and is operated in a second partial region (60) of possible load-rotational speed values, which is different from the first partial region (58), only with the first fuel, **characterized in that** in the first partial region (58) the mixture of the first and the second fuel is substantially stoichiometric and upon an occurrence of a knocking combustion the proportion of the second fuel is reduced and the proportion of the first fuel is correspondingly increased and diesel is used as the first fuel and gas as the second fuel.

2. The method for operating a self-igniting internal combustion engine (10) according to Claim 1,
**characterized in**
**that** in a further operating mode the internal combustion engine is operated stoichiometrically in the first partial region (58) of possible load-rotational speed values only with the first fuel.

3. The method for operating a self-igniting internal combustion engine (10) according to Claim 1 or 2,
**characterized in**
**that** the first partial region (58) and the second partial region (60) are adjacent to one another on a load boundary line.

4. The method for operating a self-igniting internal combustion engine (10) according to Claim 3,
**characterized in**
**that** the first partial region (58) is limited by the full load line (66), the load boundary line, a section of the minimum rotational speed line and a section of a maximum rotational speed line and that the second partial region (60) is limited by the minimum load line, the load boundary line, another section of the minimum rotational speed line and another section of the maximum rotational speed line.

5. The method for operating a self-igniting internal combustion engine (10) according to any one of the preceding claims,
**characterized in**
**that** in the operating mode in the first partial region (58) a first proportion of the first fuel and a second proportion of the second fuel in the mixture are variably fed to a combustion, wherein the first and the second proportion are 100% complementary and the first proportion is 100% and 10% and the second proportion between 0% and 90%.

6. The method for operating a self-igniting internal combustion engine (10) according to any one of the preceding claims,
**characterized in**
**that** the internal combustion engine is operated in the second partial region (60) hyperstochiometrically.

7. The method for operating a self-igniting internal combustion engine (10) according to Claim 1,
**characterized in**
**that** upon the occurrence of the knocking combustion in the operating mode in the first partial region the proportion of the second fuel is reduced to below 90%.

8. The method for operating a self-igniting internal combustion engine (10) according to any one of the preceding Claims 1 to 7,
**characterized in**
**that** in the further operating mode in the first partial region (58) no exhaust gas is recirculated and/or that during operation in the second partial region (60) exhaust gas is recirculated.

9. A self-igniting internal combustion engine (10) having a control, which comprises at least a computer and a memory element,
**characterized in**
**that** in the memory element a program is stored, which during at least partial execution in the computer carries out the steps of the method for operating a self-igniting internal combustion engine (10) according to any one of the preceding claims.

## Revendications

1. Procédé d'exploitation d'un moteur à combustion interne à auto-allumage (10), qui peut fonctionner avec un premier carburant et/ou avec un deuxième carburant et un mélange des premier et deuxième carburants, dans lequel, dans un mode de fonctionnement, le moteur à combustion interne, dans une première plage (58) de valeurs de régimes de charge possibles, fonctionne avec le mélange des premier et deuxième carburants et, dans une deuxième plage (60) de valeurs de régimes de charge possibles, différente de la première plage (58), fonctionne uniquement avec le premier carburant, **caractérisé en ce que**, dans la première plage (58), le mélange des premier et deuxième carburants est globalement stœchiométrique et, lors de l'apparition d'une combustion détonante, la part du deuxième carburant est réduite et la part du premier carburant est augmenté en conséquence et le premier carburant utilisé est du diesel et le deuxième carburant utilisé est du gaz.

2. Procédé d'exploitation d'un moteur à combustion interne à auto-allumage (10) selon la revendication 1,
**caractérisé en ce que**
dans un autre mode de fonctionnement, le moteur à combustion interne fonctionne, dans la première plage (58) de valeurs de régimes de charge possibles, uniquement avec le premier carburant de manière stœchiométrique.

3. Procédé d'exploitation d'un moteur à combustion interne à auto-allumage (10) selon la revendication 1 ou 2,
**caractérisé en ce que**
la première plage (58) et la deuxième plage (60) sont adjacentes au niveau d'une ligne de limite de charge.

4. Procédé d'exploitation d'un moteur à combustion interne à auto-allumage (10) selon la revendication 3,
**caractérisé en ce que**
la première plage (58) est limitée par la ligne de pleine charge (66), la ligne de limite de charge, une portion d'une ligne de régime minimal et une portion d'une ligne de régime maximal et **en ce que** la deuxième plage (60) est limitée par la ligne de charge minimale, la ligne de limite de charge, une autre portion de la ligne de régime minimal et une autre portion de la ligne de régime maximal.

5. Procédé d'exploitation d'un moteur à combustion interne à auto-allumage (10) selon l'une des revendications précédentes,
**caractérisé en ce que**
dans le mode de fonctionnement dans la première plage (58), une première part du premier carburant et une deuxième part du deuxième carburant sont introduits dans une combustion de manière variable sous la forme d'un mélange, les première et deuxième parts se complétant à 100 % et la première part représentant entre 100 % et 10 % et la deuxième part représentant entre 0 % et 90 %.

6. Procédé d'exploitation d'un moteur à combustion interne à auto-allumage (10) selon l'une des revendications précédentes,
**caractérisé en ce que**
le moteur à combustion interne fonctionne, dans la deuxième plage (60), de manière sur-stœchiométrique.

7. Procédé d'exploitation d'un moteur à combustion interne à auto-allumage (10) selon la revendication 1,
**caractérisé en ce que**
lors de l'apparition de la combustion détonante, dans le mode de fonctionnement dans la première plage, la part du deuxième carburant est réduite à moins de 90 %.

8. Procédé d'exploitation d'un moteur à combustion interne à auto-allumage (10) selon l'une des revendications 1 à 7,
**caractérisé en ce que**
dans l'autre mode de fonctionnement dans la première plage (58), aucun gaz d'échappement n'est retourné et/ou **en ce que** lors du fonctionnement dans la deuxième plage (60), le gaz d'échappement est retourné.

9. Moteur à combustion interne à auto-allumage (10) avec une commande qui comprend au moins un calculateur et un élément de mémoire,
**caractérisé en ce que**
dans l'élément de mémoire, est enregistré un programme qui, lors d'une exécution au moins partielle, exécute, dans le calculateur, les étapes du procédé d'exploitation d'un moteur à combustion interne à auto-allumage (10) selon l'une des revendications précédentes.
